# FASCICULE DE BREVET EUROPEEN

(11) **EP 1 771 679 B1**
(45) Date de publication et mention de la délivrance du brevet: **02.03.2011**
(21) Numéro de dépôt: 05784027.4
(22) Date de dépôt: 01.07.2005
(51) Int. Cl.: F16L 59/20

(54) **Ensemble d'au moins deux conduites coaxiale et procédé de réalisation d'un tel ensemblage**
Zusammenbau von zumindest zwei koaxialen Rohrleitungen sowie ein Verfahren zur Verwirklichung eines solchen Zusammenbaus
Assembly including at least two coaxial pipes and method of realisation of such an assembly

(30) Priorité: 23.07.2004 FR 0408156
(43) Date de publication de la demande: 11.04.2007
(73) Titulaire: SAIPEM S.A., 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2005/001674
(87) Numéro de publication internationale: WO 2006/021637

(56) Documents cités:
- GB-A- 2 161 565
- GB-A- 2 396 196
- US-A- 4 560 188
- MOLLISON M I: "FOAM INSULATION GETS FIRST REELED INSTALLATION OFF AUSTRALIA" OIL AND GAS JOURNAL, PENNWELL PUBLISHING CO. TULSA, US, vol. 90, no. 20, 18 mai 1992 (1992-05-18), pages 80-82, XP000270952 ISSN: 0030-1388

## Description

La présente invention concerne le domaine des conduites à double paroi intégrant un complexe d'isolation, notamment des conduites sous-marines véhiculant des fluides chauds ou froids.

La présente invention concerne en particulier les conduites sous-marines à isolation renforcée, installées sur les champs pétroliers par grandes profondeurs, ainsi qu'aux conduites en suspension entre le fond de la mer et un navire de surface ancré sur ledit champ pétrolier.

Plus précisément, la présente invention concerne un ensemble d'au moins deux conduites coaxiales.

Le document US 4 560 188 A1 décrit un tel ensemble selon le préambule de revendication 1. La présente invention concerne également un procédé de réalisation d'un ensemble de deux conduites coaxiales.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes laquelle peut largement dépasser 3000m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans ce type de conduite, l'espace annulaire rempli ou non d'un matériau isolant, est en général à une pression absolue inférieure à la pression atmosphérique, voire vidé de tout gaz, et l'on peut, en première approximation, considérer que radialement, la conduite interne résiste à la pression d'éclatement due au fluide interne, alors que l'enveloppe externe résiste à l'implosion créée par la pression hydrostatique au niveau du fond (p.g.h) qui est d'environ 1MPa par tranche de 100 m d'eau, c'est-à-dire 30MPa pour une profondeur de 3000m. L'effet axial dû à la pression, appelé effet de fond, s'exerce sur la section circulaire des conduites et parallèlement à l'axe desdites conduites et se répartit, en première approximation sur les deux conduites (car liées aux extrémités), au prorata des sections respectives de matériaux, en général de l'acier.

Dans le cadre des installations par grande profondeur, les conduites sous-marines ainsi que les ensembles de conduites coaxiales sous-marines sont assemblés à terre en éléments de longueur unitaire, de l'ordre de 20 à 100 m selon la capacité de tenu du système de pose. Puis ils sont transportés ainsi en mer sur un navire de pose. Lors de la pose, les longueurs unitaires des divers éléments d'ensembles de conduites coaxiales sont raccordés les uns aux autres à bord du navire et au fur et à mesure de leur pose en mer. II est donc important que ce raccordement puisse être intégré dans le procédé de montage et d'assemblage de la conduite et de pose de celle-ci au fond de la mer en le retardant le moins possible, et puisse donc être réalisé rapidement et aisément.

Lors de la pose par grand fond d'un PiP conventionnel, comparé ou tel que décrit dans ce brevet, ledit PiP est soumis à flexion, principalement dans la partie basse proche du fond de la mer. La flexion est maximale au point de contact avec le sol car le rayon de courbure décroît depuis la surface jusqu'au point de contact avec le sol, où il est alors minimal, puis le PiP reposant sensiblement à l'horizontale sur le fond de la mer, présente alors un rayon de courbure infini. La flexion engendrée au cours de la pose crée des contraintes importantes dans chacun des tubes du PiP et dans la zone de raccordement de deux longueurs successives de PiP.

Pour ce faire, on utilise des pièces de jonction ou pièces de raccordement forgées en acier, assemblées aux extrémités desdits éléments d'ensembles de conduites coaxiales à assembler. La pièce de jonction à l'extrémité aval d'un premier élément d'ensemble de conduites coaxiales non encore assemblées, étant raccordé à la pièce de jonction à l'extrémité libre amont d'un deuxième élément d'ensemble de conduites coaxiales déjà assemblées en aval.

On connaît le brevet GB 2 396 196 qui décrit des pièces de jonction dont la fonction est de permettre l'expansion thermique de la conduite interne soumise à la température du fluide, en général 60-100°C, par rapport à l'enveloppe externe qui elle reste à la température du fond de la mer, en général 3-5°C, et qui pour ce faire crée une discontinuité de la conduite interne d'une part et, d'autre part, une liaison entre la conduite interne et la conduite externe par une paroi radiale relativement fine et déformable. La pièce de jonction décrite dans GB 2 396 196 ne permet donc pas de créer une liaison rigide entre la conduite interne et l'enveloppe externe au niveau des extrémités, qui permette de transférer correctement les contraintes de traction, de compression et de flexion entre lesdites conduite interne et enveloppe externe, et de résister aux phénomènes de fatigue lors des opérations de pose et pendant toute la durée de vie du PiP, surtout dans le cas des liaisons fond-surface soumises aux effets de la houle et du courant, ladite durée de vie dépassant 25 ou 30 ans.

On connaît les brevets GB-2,161,565 et GB-2,191,842 qui décrivent un PiP et son mode d'assemblage, ainsi que deux modes de réalisation de pièces de jonction ou de raccordement forgées, le premier brevet GB-2,161,565 décrivant une pièce forgée réalisée d'une seule pièce, le second GB-2,191,842 décrivant une pièce forgée en deux éléments, la jonction entre les deux éléments des deux pièces de jonction étant assurée par un filetage, ledit filetage étant encollé pour assurer l'étanchéité.

Dans les deux cas, la pièce forgée comprend deux branches de révolution dont une branche externe et une branche interne délimitant un espace annulaire, c'est-à-dire formant une fourche dont les extrémités cylindriques libres sont assemblées aux extrémités cylindriques respectivement des conduites externes et internes.

Toutefois, dans les deux modes de réalisation, on constate des lacunes dans la fiabilité mécanique du raccordement de longueur unitaire d'ensemble de conduites coaxiales équipées à leurs extrémités de ces pièces de raccordement ou jonction.

En effet, une des lacunes des pièces forgées de jonction proposées dans ces brevets antérieurs tient en ce que dans la zone de raccordement desdites pièces, le diamètre des pièces est réduit et correspond sensiblement à celui de la conduite interne. II en résulte une variation très importante de l'inertie de la section transversale du PiP entre la zone courante dudit PiP, et ladite zone de raccordement entre deux dites longueurs unitaires de PiP, ceci conduit à créer un point de faiblesse à chacun de ces raccordements par soudage entre deux pièces forgées, la zone dudit soudage étant alors particulièrement sensible aux phénomènes de fatigue, tant durant la pose que pendant la durée de vie de la conduite.

Pour éviter cette zone de faiblesse et conserver une inertie de section transversale sensiblement constante, on peut augmenter l'épaisseur de la paroi de la pièce forgée dans toute la zone située entre la partie massive de ladite pièce forgée et la zone du chanfrein où sera effectuée la soudure. Mais, il faut alors en général quasiment doubler ladite épaisseur. Et, dans le cas des conduites de fort diamètre et devant être posées par grandes profondeurs, le soudage devient alors problématique en raison de la très forte épaisseur d'acier, ladite épaisseur pouvant atteindre 40 à 50mm, ce qui nécessite des procédés de soudage très délicats, voire dans certains cas quasiment irréalisables sans défauts compte tenu des effets dynamiques en mer sur la masse d'acier en fusion. De plus, lesdites soudures étant réalisés à bord des navires de pose, ces derniers ayant un coût horaire extrêmement élevé, le coût d'installation devient prohibitif et les risques de défaillance sont considérables en raison de la complexité desdites opérations de soudage sur site.

On préfère alors la méthode décrite dans le brevet FR-2,751,721 qui consiste en un mode de réalisation des extrémités d'un PiP, assorti d'un mode de renfort de la zone de raccordement entre deux longueurs unitaires de PiP par un manchon coulissant à jeu réduit sur l'enveloppe externe, ledit manchon coulissant étant solidarisé à ladite enveloppe externe par collage. Cette disposition permet d'augmenter localement l'inertie de la section transversale pour limiter les contraintes dans la zone de raccordement entre deux longueurs unitaires de PiP, mais nécessite la fabrication de plusieurs pièces mécaniques compliquées à monter et nécessite un raccordement relativement difficile à mettre en oeuvre. De plus le collage proposé reste sujet à fluage et se dégrade lors des cycles thermiques dont sont sujet les conduites au cours de leur durée de vie de 20 à 30ans. Enfin, ce type de collage ne pourrait pas être envisagé de manière fiable dans le cas de liaisons fond surface, car les effets dynamiques de la houle et du courant sur la conduite en suspension entre le fond de la mer et le support flottant, dégraderaient rapidement le plan de collage induisant une fatigue rapide et excessive sur la zone de raccordement du PiP.

Ainsi le problème posé est de réaliser un raccordement de longueur unitaire d'ensemble de conduites coaxiales de type PiP amélioré de manière à faciliter la mise en oeuvre des moyens de raccordement et opérations de raccordement, notamment en optimisant les engins de pose, et dont les zones de raccordement entre deux longueurs unitaires sont renforcées, de manière à ce que les contraintes engendrées lors de la pose soient minimisées et que le comportement en fatigue, dans le cas des liaisons fond-surface soit radicalement amélioré.

Pour ce faire, la présente invention fournit un ensemble d'au moins deux conduits coaxiales selon la revendication 1.

La pièce de jonction selon l'invention peut être constituée d'une unique pièce métallique forgée, c'est-à-dire constituée d'un seul tenant, de préférence en acier, ou bien encore de préférence en acier allié.

La présente invention fournit également un procécé de realisation de l'ensemble de deux conduites coaxiales mentionné ci-dessus,
caractérisé en ce que l'on réalise les étapes dans lesquelles :
1) on assemble un dit premier élément d'ensemble de conduites coaxiales selon l'invention, comportant une première pièce de jonction, selon l'invention, à l'extrémité aval, et un deuxième dit élément d'ensemble de conduites coaxiale selon l'invention comportant une deuxième dite pièce de jonction selon l'invention, à l'extrémité amont, les deux dites deuxièmes branches externes des deux dites première et deuxième pièces de jonction étant de préférence de même épaisseur, et
2) on rapproche les unes des autres et on soude entre elles les extrémités libres des seules dites deuxièmes branches externe desdites première et deuxième pièces de jonction des deux dits éléments d'un ensemble d'au moins deux conduites coaxiales selon l'invention à assembler, les extrémités desdites deux branches internes (5₂) non soudées venant buter en contact l'une avec l'autre lors de l'assemblage des deux dites pièces de jonction, de sorte que lesdites deuxièmes cavités internes (6) ne sont pas étanches vis-à-vis de l'intérieur de ladite paroi interne et de ladite conduite interne.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par un « effet radiateur » provoqué par la zone pleine et massive située entre les fonds desdites première et deuxième cavités, ladite perturbation consistant en un refroidissement déséquilibré entre la gauche et la droite de ladite zone de soudure.

La continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes,et donc de renforcer le raccordement là ou précisément les contraintes sont maximales. En effet, l'inertie de la section transversale d'une conduite par rapport à son centre varie comme la puissance 4 du rayon, ce qui conduit à une épaisseur nécessaire considérable dans le cas de l'art antérieur tel que décrit dans GB-2,161,565 GB-2,191,942. En revanche, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part le fait que deux pièces de jonction adjacentes soient soudées, uniquement au niveau de l'extrémité desdites deuxième branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces adjacentes selon l'invention, ne soient pas soudées entre elles, autorise des mouvements infimes desdites parois internes face à face dus à des éventuelles flexions ou variations de pression ou de température et autorise que lesdites parois internes puissent se déforment plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique et la butée entre les extrémités libres desdites deuxièmes branches internes de deux pièces de jonction assemblées l'une à l'autre assure une continuité presque complète avec la conduite interne et permet d'éviter des phénomènes de turbulence du type vortex dans la circulation du fluide à l'intérieur du dispositif après assemblage, au niveau du raccordement de deux dites pièces de jonction de deux portions de PIP adjacentes.

Enfin, la zone pleine entre les fonds desdites première et deuxième cavités permet de transférer les efforts de compression ou de traction entre les conduites interne et externe.

Toutes ces caractéristiques contribuent à améliorer radicalement le comportement en flexion, ainsi qu'en fatigue, d'un dispositif impliquant deux éléments d'ensemble coaxial équipé de dites pièces de jonction et raccordées l'une à l'autre, à bord des navires d'installation.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble de d'au moins deux conduites coaxiales.

On notera que ladite deuxième cavité ne doit pas être étanche après raccordement de deux pièces de jonction, vis-à-vis de l'intérieur de ladite paroi interne et de ladite conduite interne car lors du démarrage de la circulation d'un fluide à l'intérieur, celui-ci devra migrer vers cette deuxième cavité, l'étanchéité étant assurée par la soudure externe au niveau de l'extrémité desdites deuxièmes branches externes, le fluide se trouvant piégé durant toute la durée de vie de l'installation au niveau de cette deuxième cavité.

Selon des caractéristiques préférées et avantageuses de la présente invention :
- l'extrémité libre de ladite deuxième branche externe présente une forme, de préférence un chanfrein, la rendant apte à être soudée à l'extrémité libre d'une autre dite deuxième branche externe d'une autre pièce de jonction à laquelle elle est destinée à être assemblée, ladite autre pièce de jonction étant, elle-même, assemblée à l'extrémité d'un deuxième dit élément d'ensemble de deux conduites coaxiales, et
- l'extrémité libre de ladite deuxième branche interne présente une forme la destinant à buter en contact sans lui être soudée avec l'extrémité libre d'une autre dite deuxième branche interne d'une autre dite pièce de jonction assemblée à l'extrémité d'un dit deuxième élément d'ensemble de conduites coaxiales ;
- les extrémités libres des dites deuxièmes branche externe (5₁) et branche interne (5₂) d'une même pièce de jonction arrivent sensiblement au même niveau dans ladite direction longitudinale (X, X'), et
- les deux dites deuxièmes branches externes des deux dites pièces de jonction destinées à être assemblées par soudure étant de même épaisseur, et d'épaisseur supérieure à l'épaisseur de la conduite externe du PiP, et de préférence d'épaisseur supérieure à l'épaisseur de ladite deuxième branche interne de ladite pièce de jonction, et
- l'extrémité de ladite deuxième branche externe présente un chanfrein tourné vers l'extérieur, apte à permettre une soudure depuis l'extérieur ;
- les extrémités libres desdites premières branche externe et interne présentent une forme, de préférence en chanfrein 8, les rendant aptes à être soudées aux extrémités libres respectivement desdites conduites externe et interne, de préférence aptes à être soudées respectivement depuis l'extérieur de la dite conduite externe pour lesdites premières branches externes et depuis l'intérieur de ladite conduite interne pour lesdites premières branches internes ;

Dans un mode de réalisation avantageux, ladite deuxième branche interne comporte sur sa face frontale à son extrémité libre dans la direction longitudinale ZZ', un élément de centrage mâle ou femelle, apte à coopérer avec un élément, respectivement femelle ou mâle de la face frontale de l'extrémité libre d'une dite autre deuxième branche interne d'une autre dite pièce de jonction à laquelle elle est destinée à être assemblée, de manière à :
- assurer un effet de centrage des deux dites pièces de jonction lors de leur approche en vue de leur assemblage, et
- ajuster l'écartement des faces frontales d'extrémité des dites deuxièmes branches externes de dites pièces de jonction à assembler lors de leur approche en vue de leur assemblage pour que, de préférence, l'assemblage puisse se faire par soudure et que ladite soudure puisse être réalisée sur toute l'épaisseur desdites faces frontales des extrémités desdites deuxièmes branches externes destinées à être assemblées.

Plus particulièrement, ledit élément mâle est constitué par une forme protubérante, de préférence de révolution, de ladite face frontale à l'extrémité de ladite deuxième branche interne, ledit élément mâle étant apte à coopérer avec un élément femelle correspondant, constitué par une forme creuse complémentaire, de préférence de révolution, dans la face frontale à l'extrémité d'une dite deuxième branche interne d'une dite autre pièce de jonction à laquelle elle est destinée à être assemblée.

Plus particulièrement encore, ladite forme protubérante dudit élément mâle est formée par un joint annulaire rapporté sur ladite face frontale à l'extrémité de ladite deuxième branche interne.

Dans un mode de réalisation avantageux, l'épaisseur de ladite deuxième branche interne va en diminuant entre le fond de ladite deuxième cavité annulaire et ladite face frontale de ladite deuxième branche interne, la surface de ladite deuxième branche interne s'inscrivant ainsi par exemple dans une enveloppe conique.

Cette paroi interne amincie au niveau de ladite deuxième branche interne lui permet de jouer le rôle de butée éventuelle tout en autorisant plus facilement sa déformation plastique et son matage éventuel lors des mouvements de flexion ou des variations de pression ou de température, l'essentiel des contraintes étant quasi intégralement transmise au niveau de ladite deuxième branche externe.

Dans une variante de réalisation avantageuse l'extrémité de ladite première branche interne du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe, de manière à ce que ladite pièce de jonction puisse être assemblée à un dit ensemble de conduites coaxiales dont l'extrémité de ladite conduite externe dépasse sensiblement d'une même longueur par rapport à celle de ladite conduite interne. Ce mode de réalisation est rendu nécessaire pour que la réalisation des soudures de raccordement de la pièce de jonction forgée avec les conduites interne et externe puisse être effectuée depuis l'extérieur.

Plus particulièrement, l'extrémité de ladite première branche externe présente un chanfrein tourné vers l'extérieur apte à permettre une soudure depuis l'extérieur et l'extrémité de ladite première branche interne présente un chanfrein tournée vers l'intérieur apte à permettre une soudure depuis l'intérieur de ladite conduite interne.

Dans un mode de réalisation particulier, lesdites première et deuxième cavités annulaires présentent une forme oblongue en section longitudinale, les fonds et présentant une forme incurvée dont les rayons de courbure sont, de préférence, identiques.

Plus particulièrement encore :
- les fonds desdites première et deuxième cavités, sont espacés d'une longueur de 0.5 à 3 fois l'épaisseur maximale de ladite pièce de jonction forgée dans ladite zone pleine,
- la longueur desdites premières branches interne et externe forme une dite première cavité d'une profondeur de 1 fois à 5 fois l'épaisseur des conduites interne et respectivement externe, et
- la longueur desdites deuxièmes branches externe et interne forme une dite deuxième cavité d'une profondeur de 1 fois à 5 fois l'épaisseur de ladite deuxième branche externe, et
- l'épaisseur desdites deuxièmes branches externes étant supérieure de 5 à 100%, de préférence de 30 à 70% de l'épaisseur de la conduite externe.

Selon des caractéristiques particulières d'un procédé de réalisation d'un ensemble de deux conduites coaxiales selon l'invention :
- l'une au moins desdites deuxièmes branches internes desdites première et deuxième pièces de jonction à assembler, présente une épaisseur diminuant depuis le fond de ladite deuxième cavité vers ladite face frontale à l'extrémité de ladite deuxième branche interne, et
- la longueur de dépassement de l'extrémité desdites deuxièmes branches interne et externe l'une par rapport à l'autre d'une dite première pièce de jonction, est apte à s'adapter à la longueur de dépassement de l'extrémité desdites deuxièmes branches interne et externe l'une par rapport à l'autre d'une dite deuxième pièce de jonction à laquelle ladite première pièce de jonction est assemblée, et
- lesdites deuxièmes branches externe et interne de chacune des deux dites pièces de jonction sont telles que leurs extrémités sont sensiblement au même niveau dans ladite direction longitudinale axiale XX'.

D'autres caractéristiques et avantages de la présente invention apparaîtront à la lumière de la description détaillée qui va suivre, en référence aux figures suivantes dans lesquelles :
- La figure 1a est une coupe longitudinale axiale d'un PIP comportant une première pièce de jonction 1a soudée à son extrémité selon un premier mode de soudage,
- La figure 1b est une coupe longitudinale axiale de la seconde extrémité du PiP selon la figure 1a, comportant une deuxième pièce de jonction 1b soudée selon un second mode de soudage,
- La figure 2 est une coupe longitudinale axiale du raccordement de deux longueurs de PiP équipées chacune d'une pièce de jonction 1a, 1 b à leur extrémité,
- Les figures 2a à 2e représentent des variantes de réalisation des extrémités des pièces de jonction au niveau de leur raccordement.

Les pièces de jonction 1a, 1b de révolution et sensiblement cylindriques sont destinées à la jonction de deux éléments d'un ensemble d'au moins deux conduites coaxiales, comprenant une conduite externe 2₁ contenant une conduite interne 2₂ délimitant un espace annulaire 2₃ contenant un matériau d'isolation 2₄, l'espace annulaire étant de préférence sous pression réduite de gaz, lesdits éléments étant appelés ci-après longueur unitaire de PiP.

Ladite pièce de jonction 1a, 1b est délimitée comme suit :
■ dans une direction radiale par rapport à un axe longitudinal XX' de révolution de ladite pièce, elle est délimitée par une paroi interne cylindrique 1₂ sensiblement de même diamètre que celui de la partie courante de ladite conduite interne 2₂, et par une paroi externe 1₁ cylindrique de diamètre sensiblement égal au diamètre externe de la partie courante de ladite conduite externe 2₁, et
■ dans la direction axiale longitudinale XX',
   - du côté de ladite pièce de jonction destiné à être assemblé par soudage 9 à l'extrémité desdites conduites externe et interne d'un dit élément d'un ensemble d'au moins deux conduites coaxiales, lesdites parois externe 1₁ et interne 1₂ de ladite pièce de jonction forment en section longitudinale des premières branches respectivement externe 3₁ et interne 3₂ sensiblement de même épaisseur que lesdites conduites externe 2₁ et interne 2₂ auxquelles elles sont destinées à être assemblées, lesdites premières branches externe 3₁ et interne 3₂ délimitant une première cavité annulaire 4, et
   - du côté opposé de ladite pièce de jonction destiné à être assemblé à une autre dite pièce de jonction, elle-même assemblée par soudage 9 à l'extrémité d'un autre élément d'ensemble de deux conduites coaxiales, lesdites parois externe 1₁ et interne 1₂ forment en section longitudinale des deuxièmes branches respectivement externe 5₁ et interne 5₂, délimitant une deuxième cavité annulaire 6,
   - les fonds 4₁, 6₁ desdites première et deuxième cavités 4, 6 étant espacés dans ladite direction longitudinale XX', de manière à délimiter une zone pleine 10 de ladite pièce de jonction dans laquelle lesdites parois externe 1₁ et interne 1₂ forment les faces externe et interne d' une même paroi cylindrique.

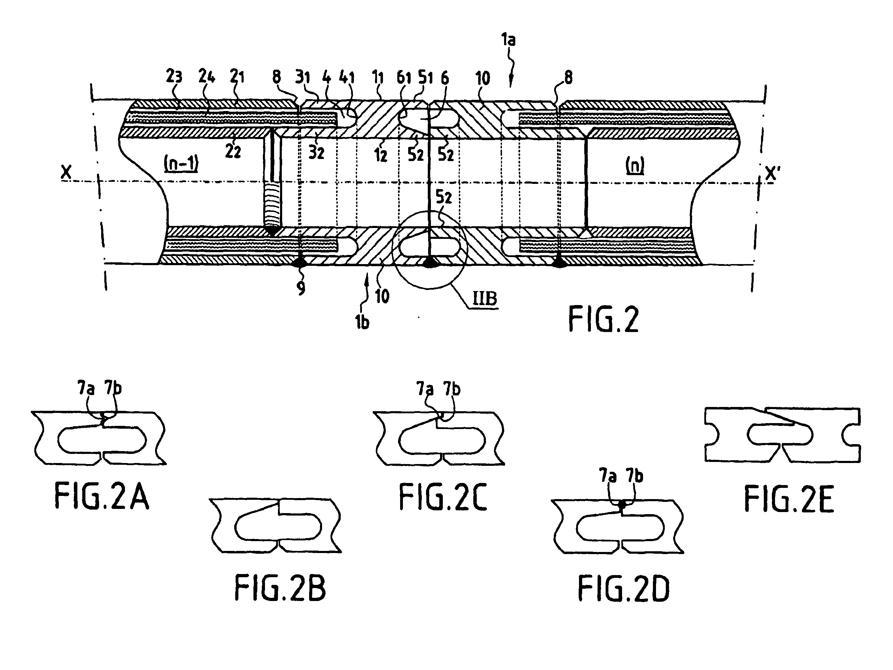

Comme montré sur la figure 2, la première cavité annulaire 4 est ouverte sur l'espace annulaire 2₃ et peut recevoir le matériel d'isolation 2₄ de façon à continuer l'isolation de la conduite le plus loin possible.

Après assemblage et raccordement de deux longueurs unitaires de PiP équipées de pièces de jonction forgées, la deuxième cavité annulaire 6 d'une première pièce de jonction à l'extrémité aval d'une première longueur de PiP est ouverte sur une deuxième cavité annulaire d'une deuxième pièce de jonction 1a à l'extrémité amont d'une deuxième longueur de PiP formant ainsi une chambre formée par soudage au niveau des extrémités des deuxièmes branches externes 5₁. Mais cette chambre n'est pas étanche, car l'extrémité des deuxièmes branches internes 5₁ des deux pièces de jonction 1a, 1b, n'est pas soudée, les faces desdites branches étant simplement en contact l'une avec l'autre.

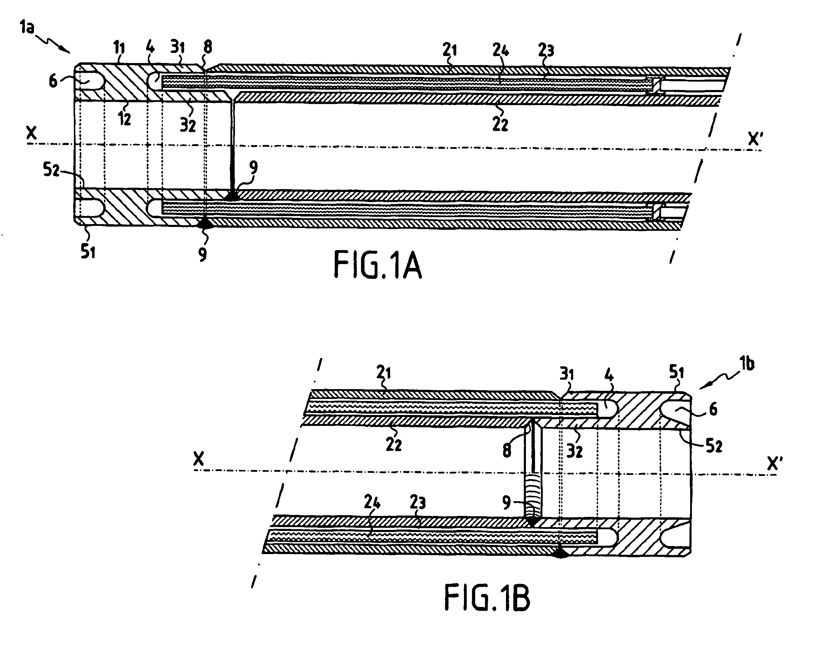

Les extrémités libres desdites premières branches externe 3₁ et interne 3₂ présentent une forme, en chanfrein 8, ce qui permet d'effectuer de manière connue une première passe de soudage dite « de pleine pénétration », suivi d'un remplissage complet du chanfrein comme explicité en 9. Sur la figure 1a, les chanfreins 8 sont tournés vers l'extérieur et sont donc aptes à être soudés depuis l'extérieur desdites conduites externe 3₁ et interne 3₂. Sur la figure 1b, les chanfreins 8 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

Pour la clarté de la description sur les figures 1a, 1b et 2, les divers éléments constitutifs ont été représentés soudés en partie basse des dessins, et en partie haute, positionnés face-à-face avant réalisation desdites soudures 9.

Sur la figure 2, les extrémités libres de ladite deuxième branche externe 5₁ présentent une forme en chanfrein 8 tourné vers l'extérieur d'une première pièce de jonction 1a la rendant apte à être soudée depuis l'extérieur à l'extrémité libre d'une autre dite deuxième branche externe d'une autre pièce de jonction 1b à laquelle elle est destinée à être assemblée, ladite autre pièce de jonction étant, elle-même, à l'extrémité d'un deuxième élément d'ensemble de deux conduites coaxiales.

Dans la pièce de jonction forgée 1a, l'extrémité de ladite première branche interne 3₂ du côté de ladite pièce de jonction apte à être directement assemblée à un dit élément d'un dit ensemble de conduites coaxiales, dépasse dans ladite direction longitudinale axiale XX' par rapport à l'extrémité d'une dite première branche externe 3₁, de manière à ce que ladite pièce de jonction puisse être assemblée par soudage à un dit ensemble de conduites coaxiales dont l'extrémité de ladite conduite externe dépasse par rapport à celle de ladite conduite interne.

Dans une version préférée de l'invention, les pièces de jonction forgées 1a-1b sont réalisées comme explicité sur la figure 2 et présentent un diamètre externe et une épaisseur de paroi sensiblement égaux, de préférence égaux, à celui de la portion courante d'enveloppe externe. En procédant ainsi, la conduite présente sur toute sa longueur une inertie sensiblement constante, ce qui évite les accumulations de contraintes au niveau des raccordements entre deux longueurs unitaires de PiP et améliore considérablement le comportement en flexion et en fatigue de la conduite et lui permet alors de résister, surtout dans le cas des liaisons fond-surface soumises aux effets de la houle et du courant, pendant toute la durée de vie des installations qui atteint et dépasse 30 ans.

Pour éviter les phénomènes de vortex indésirables au niveau du raccordement de deux pièces de jonction forgées 1a-1b de deux portions de PiP adjacentes, lorsque le pétrole brut circule à l'intérieur de la conduite interne, le diamètre interne de la pièce de jonction forgée 1a est prolongé jusqu'à la face de jonction avec son correspondant 1b, mais la jonction n'est pas soudée, de manière à éviter les phénomènes de transfert de charge et de contraintes entre l'enveloppe externe et la conduite interne, ce qui risquerait de conduire à des fissurations ou des phénomènes de fatigue qui ne manqueraient pas de ruiner complètement la conduite. Les deux prolongations de la partie interne on donc un simple rôle de continuité du diamètre interne de la conduite interne et elles peuvent être usinées de multiples manières telles que représentées sur les figures 2a-2e.

En figure 2a, la face frontale 7 de la pièce d'extrémité forgée 1b présente une forme mâle de révolution qui coopère avec la forme femelle correspondante de la face frontale de la pièce de jonction forgée 1a, assurant ainsi non seulement un effet de centrage automatique des deux pièces d'extrémité forgées lors de leur approche en vue de l'assemblage final sur site de la conduite au sein de la tour de pose en J, mais aussi il permet d'ajuster l'écartement des faces parallèles des deux chanfreins 8, écartement qui doit être extrêmement précis pour que la soudure puisse être réalisée, de manière connue, en pleine pénétration et ainsi présenter une résistance optimale.

La forme représentée sur la figure 2b ne permet pas l'auto-centrage des deux pièces l'une par rapport à l'autre et nécessite un dispositif externe ou interne de centrage lors de la soudure, mais elle permet de garantir l'écartement des pièces dans la zone du chanfrein. On notera de plus, que la pièce de jonction forgée 1b présente une paroi amincie, ce qui lui permet de jouer le rôle de butée pour la phase de soudage. Mais, du fait de son amincissement, en cas de mouvements infimes des parois face-à-face dus aux flexions, aux variations de pression et de température, ladite paroi amincie aura tendance à se déformer plastiquement et à se mater, car elle ne présente alors pas la section suffisante, donc la résistance suffisante pour transférer les charges de compression de contact. On évite ainsi de perturber la répartition des contraintes dans cette zone de l'assemblage et la quasi intégralité des contraintes sont reprises au niveau des branches externes 5₁. Le comportement en flexion lors de la pose s'en trouve grandement amélioré et dans le cas de liaisons fond-surface, le comportement en fatigue permet d'atteindre les objectifs de durée de vie, c'est-à-dire 30 ans voire plus, et ceci, même dans des mers réputées difficiles, telles la Mer du Nord ou le Golfe du Mexique.

Sur les figures 2a à 2d, l'une seulement desdites deuxièmes branches internes 5₂ desdites première et deuxième pièces de jonction à assembler, présente une épaisseur diminuant depuis le fond 6₁ de ladite deuxième cavité vers ladite face frontale 7 à l'extrémité de ladite deuxième branche interne 5₂, et lesdites deuxièmes branches externe 5₁ et interne 5₂ de chacune des deux dites pièces de jonction sont telles que leurs extrémités sont sensiblement au même niveau dans ladite direction longitudinale axiale de leurs deuxièmes branches interne 5₂ et externe 5₁. Mais on pourrait envisager que chacune des pièces forgées 1a-1b présente la même forme conique conduisant à une section de contact réduite pour éviter les phénomènes indésirables décrits précédemment.

Sur la figure 2e les deux deuxièmes branches internes présentent une épaisseur diminuant depuis le fond de la deuxième cavité jusque vers l'extrémité, mais dans ce cas elles se chevauchent l'une par-dessus l'autre, leurs faces frontales d'extrémité n'étant plus alors en vis à vis.

A titre d'exemple, pour une pièce de jonction forgée 1a de 300mm de diamètre interne, et présentant une épaisseur de conduite interne de 19mm, le talon aminci de la pièce de jonction forgée 1b correspondante sera avantageusement réduite à 3mm pour annihiler les phénomènes indésirables décrits précédemment.

Sur la figure 2c on a représenté un joint rapporté 7a, de préférence un joint métallique, ou plutôt un jonc métallique discontinu ou poreux, qui joue alors un simple rôle de centreur. Ce joint ne devra pas être étanche de manière à laisser passer le fluide depuis l'intérieur de la conduite interne vers la chambre 6.

La deuxième cavité annulaire 6 présente une forme oblongue, le rayon de courbure du fond 6₁ circulaire étant de préférence identique au rayon de courbure 4₁ de la première cavité annulaire 4 au niveau de la zone de raccordement avec l'enveloppe externe 2₁ et la conduite interne 2₂ du PiP. Cette deuxième cavité annulaire 6 ne doit pas être étanche vis-à-vis de l'intérieur de la conduite interne, mais elle doit être en communication avec cette dernière, car lors du test final ou lors du démarrage de la production, le fluide migre vers cette deuxième cavité 6, l'étanchéité de la conduite étant assurée par le cordon de soudure externe 9, et ledit fluide s'y trouve piégé pendant toute la durée de vie des installations, sans quasiment être renouvelé.

Le diamètre externe de ladite première paroi externe 1₁ est en général de 150mm à 750mm, voire plus, le diamètre interne de ladite paroi interne 1₂ de ladite pièce de jonction étant de 50mm à 700mm.

A titre d'exemple, un PiP constituée d'une conduite interne de 203.2mm de diamètre intérieur, et de 16.3mm d'épaisseur, et d'une conduite externe de 293.05mm de diamètre intérieur, et de 15.4mm d'épaisseur présente une inertie de la section transversale par rapport à son centre, de 245 984 742mm⁴.

Pour assurer une inertie équivalente au niveau de l'assemblage entre deux longueurs unitaires, il faut :
- selon l'art antérieur du brevet GB 2,161,565, une pièce de jonction forgée sans manchon additionnel rapporté, présentant une épaisseur de paroi au niveau de la soudure de raccordement entre deux longueurs unitaires de PiP de 41.5 mm,
- selon l'art antérieur du brevet FR 2 751 721, une pièce de jonction forgée, complétée par un manchon de 10mm d'épaisseur rapporté par collage, présentant une épaisseur de paroi au niveau de la soudure de raccordement entre deux longueurs unitaires de PiP de 16.3 mm
- et selon une version préférée de l'invention, une pièce forgée, sans manchon additionnel, présentant une épaisseur de paroi au niveau de la soudure de raccordement entre deux longueurs unitaires de PiP de 22.83 mm, c'est-à-dire une épaisseur desdites deuxièmes branches externes de 22,83 mm.

Ainsi, l'épaisseur de la pièce de jonction forgée, au niveau de la deuxième branche externe, reste raisonnable et est sensiblement supérieure à l'épaisseur de la conduite externe, sans nécessiter de rapporter un manchon additionnel, ce dernier ne garantissant pas une fiabilité dans le temps.

Dans le cas de soudage de fortes épaisseurs d'acier, c'est-à-dire au-delà de 25-30mm, il est nécessaire d'appliquer des procédures de soudage très délicates, donc difficiles à réaliser dans des temps réduits. Et, dans les cas extrêmes d'épaisseurs de 40 à 50mm et plus, on peut être contraint d'effectuer des chanfreins en X, qui nécessitent alors une phase de soudage par l'extérieur et une autre phase de soudage par l'intérieur, ce qui complique considérablement l'installation des conduites à bord des navires de pose et augmente de manière significative les temps opérationnels, ainsi que les risques de rupture des soudures dans le temps, en raison de leur complexité d'exécution sur chantier.

Le mode d'assemblage utilisant les pièces de jonction forgées constitue ainsi un mode privilégié pour la réalisation de liaisons fond-surface devant résister en fatigue sur des périodes de 20 à 30 ans voire plus, en raison de l'absence de manchon externe rapporté et de l'épaisseur raisonnable de la deuxième branche externe, ce qui autorise la mise en oeuvre de procédures de soudure classiques et parfaitement maîtrisées.

## Revendications

1. Ensemble d'au moins deux conduites coaxiales constitué en partie courante d'une conduite externe (2₁) et d'une conduite interne (2₂), délimitant un espace annulaire (2₃), comprenant de préférence un matériau d'isolation (2₄), constitué de l'assemblage d'éléments unitaires d'au moins deux conduites coaxiales, comprenant au moins deux éléments unitaires d'ensemble de conduites coaxiales, comprenant chacun à au moins une extrémité une pièce de jonction assemblée à la pièce de jonction (1) de l'autre dit élément unitaire d'ensemble de conduites coaxiales, chacune des dites pièces de jonction (1) étant une pièce de jonction de révolution délimitée comme suit :
■ dans une direction radiale par rapport à un axe longitudinal XX' de révolution de ladite pièce, elle est délimitée par une paroi interne cylindrique (1₂) sensiblement de même diamètre que celui de la partie courante de ladite conduite interne (2₂), et par une paroi externe (1₁) cylindrique de diamètre sensiblement égal au diamètre externe de la partie courante de ladite conduite externe (2₁), et
■ dans la direction axiale longitudinale XX',
• du côté de ladite pièce de jonction assemblé par soudage (9) à l'extrémité desdites conduites externe et interne d'un dit élément unitaire d'un ensemble d'au moins deux conduites coaxiales, lesdites parois externe (1₁) et interne (1₂) de ladite pièce de jonction forment en section longitudinale des premières branches respectivement externe (3₁) et interne (3₂) sensiblement de même épaisseur que lesdites conduites externe (2₁) et interne (2₂) auxquelles elles sont assemblées, lesdites premières branches externe (3₁) et interne (3₂) délimitant une première cavité annulaire (4), et
• du côté opposé de ladite pièce de jonction assemblé à une autre dite pièce de jonction, elle-même assemblée par soudage (9) à l'extrémité dudit autre élément unitaire d'ensemble de deux conduites coaxiales, lesdites parois externe (1₁) et interne (1₂) forment en section longitudinale des deuxièmes branches respectivement externe (5₁) et interne (5₂), délimitant une deuxième cavité annulaire (6),
• les deux dites première et deuxième pièces de jonction étant soudées l'une à l'autre uniquement au niveau de l'extrémité desdites deuxièmes branches externes (5₁), et
• les fonds (4₁, 6₁) desdites première et deuxième cavités (4, 6) étant espacés dans ladite direction longitudinale XX', de manière à délimiter une zone pleine (10) de ladite pièce de jonction dans laquelle lesdites parois externe (1₁) et interne (1₂) forment les faces externe et interne d'une même paroi cylindrique,
**caractérisé en ce que** les extrémités desdites deux branches internes (5₂) non soudées butent en contact l'une avec l'autre, de sorte que lesdites deuxièmes cavités internes (6) ne sont pas étanches vis-à-vis de l'intérieur de ladite paroi interne et de ladite conduite interne.

2. Ensemble d'au moins deux conduites coaxiales selon la revendication 1, **caractérisée en ce que** :
- l'extrémité libre de ladite deuxième branche externe (5₁) présente une forme, de préférence un chanfrein (8), soudée à l'extrémité libre d'une autre dite deuxième branche externe de l'autre pièce de jonction à laquelle elle est destinée à être assemblée, ladite autre pièce de jonction étant, elle-même, assemblée à l'extrémité de l'autre dit élément unitaire d'ensemble de deux conduites coaxiales, et
- l'extrémité libre de ladite deuxième branche interne (5₂) présente une forme butant en contact sans lui être soudée avec l'extrémité libre de l'autre dite deuxième branche interne de l'autre dite pièce de jonction assemblée à l'extrémité dudit autre élément unitaire d'ensemble de conduites coaxiales, et
- les extrémités libres des dites deuxièmes branche externe (5₁) et branche interne (5₂) d'une même pièce de jonction arrivent sensiblement au même niveau dans ladite direction longitudinale (X, X'), et
- les deux dites deuxièmes branches externes des deux dites pièces de jonction assemblées par soudure étant de même épaisseur, supérieure à l'épaisseur de ladite conduite externe, et de préférence supérieure à l'épaisseur de ladite deuxième branche interne de ladite pièce de jonction.

3. Ensemble d'au moins deux conduites coaxiales selon la revendication 1 ou 2, **caractérisée en ce que** les extrémités libres desdites premières branche externe (3₁) et interne (3₂) présentent une forme, de préférence en chanfrein (8), soudées aux extrémités libres respectivement desdites conduites externe (2₁) et interne (2₂), de préférence soudées respectivement depuis l'extérieur de la dite conduite externe pour lesdites premières branches externes et depuis l'intérieur de ladite conduite interne pour lesdites premières branches internes.

4. Ensemble d'au moins deux conduites coaxiales selon l'une des revendications 1 à 3, **caractérisée en ce que** lesdites première et deuxième cavités annulaires (4, 6) présentent une forme oblongue en section longitudinale, les fonds (4₁) et (6₁) présentant une forme incurvée dont les rayons de courbure sont, de préférence, identiques.

5. Ensemble d'au moins deux conduites coaxiales selon lune des revendications 1 à 4, **caractérisée en ce que** :
- les fonds (4₁, 6₁) desdites première et deuxième cavités (4, 6), sont espacés d'une longueur de 0,5 à 3 fois l'épaisseur maximale de la paroi de ladite pièce de jonction dans ladite zone pleine (10),
- la longueur desdites premières branches externe et interne (3₁, 3₂) forme une dite première cavité (4) de 1 à 5 fois l'épaisseur des conduites externe et respectivement interne,
- la longueur desdites deuxièmes branches externe (5₁) et interne (5₂) forme une dite deuxième cavité (6) de 1 à 5 fois l'épaisseur de ladite deuxième branche externe,
- l'épaisseur desdites deuxièmes branches externes (5₁-5₂) étant supérieure de 5 à 100%, de préférence de 30 à 70% de l'épaisseur de ladite conduite externe, et
- de préférence l'épaisseur desdites premières branches externe et interne (3₁, 3₂) étant sensiblement égale à celle desdites conduites externe et respectivement interne.

6. Ensemble d'au moins deux conduites coaxiales selon l'une des revendications 1 à 5, **caractérisée en ce que** ladite deuxième branche interne (5₂) d'une des 2 dites pièces de jonction comporte sur sa face frontale(7) à son extrémité libre dans la direction longitudinale ZZ', un élément de centrage (7a) mâle ou femelle, coopérant avec un élément, respectivement femelle ou mâle (7b) de la face frontale de l'extrémité libre d'une dite deuxième branche interne de la dite autre pièce de jonction à laquelle elle est assemblée, de manière à :
- assurer un effet de centrage des deux dites pièces de jonction lors de leur approche en vue de leur assemblage, et
- ajuster l'écartement des faces frontales d'extrémité des dites deuxièmes branches externes (5₁) de dites pièces de jonction à assembler lors de leur approche en vue de leur assemblage pour que, de préférence, l'assemblage puisse se faire par soudure et que ladite soudure soit réalisée sur toute l'épaisseur desdites faces frontales des extrémités desdites deuxièmes branches externes (5₁) assemblées.

7. Ensemble d'au moins deux conduites coaxiales selon la revendication 6, **caractérisée en ce que** ledit élément mâle (7a) est constitué par une forme protubérante, de préférence de révolution, de ladite face frontale à l'extrémité de ladite deuxième branche interne (5₂), ledit élément mâle coopérant avec un élément femelle (7b) correspondant, constitué par une forme creuse complémentaire, de préférence de révolution, dans la face frontale à l'extrémité d'une dite deuxième branche interne d'une dite autre pièce de jonction à laquelle elle est assemblée.

8. Ensemble d'au moins deux conduites coaxiales selon la revendication 7, **caractérisée en ce que** ladite forme protubérante dudit élément mâle est formée par un joint annulaire rapporté sur ladite face frontale à l'extrémité de ladite deuxième branche interne.

9. Ensemble d'au moins deux conduites coaxiales selon l'une des revendications 1 à 8, **caractérisée en ce que** l'épaisseur de ladite deuxième branche interne (5₂) d'une des deux pièces de jonction va en diminuant entre le fond (6₁) de ladite deuxième cavité annulaire (6) et ladite face frontale (7) de ladite deuxième branche interne (5₂).

10. Ensemble d'au moins deux conduites coaxiales selon l'une des revendications 1 à 9, **caractérisée en ce que** l'extrémité de ladite première branche interne (3₂) du côté de ladite pièce de jonction directement assemblée à un dit élément unitaire d'un dit ensemble de conduites coaxiales, dépasse dans ladite direction longitudinale axiale XX' par rapport à l'extrémité d'une dite première branche externe (3₁), de manière à ce que ladite pièce de jonction soit assemblée à un dit élément unitaire d'un ensemble de conduites coaxiales dont l'extrémité de ladite conduite externe dépasse sensiblement d'une même longueur par rapport à celle de ladite conduite interne.

11. Ensemble d'au moins deux conduites coaxiales selon la revendication 10, **caractérisée en ce que** l'extrémité de ladite première branche externe (3₁) présente un chanfrein tourné vers l'extérieur apte à permettre une soudure depuis l'extérieur et l'extrémité de ladite première branche interne (3₂) présente un chanfrein tournée vers l'intérieur apte à permettre une soudure depuis l'intérieur de ladite conduite interne.

12. Ensemble d'au moins deux conduites coaxiales selon l'une des revendications 1 à 11, **caractérisée en ce que** les extrémités desdites deuxièmes branches interne et externe arrivent sensiblement au même niveau dans ladite direction longitudinale axiale XX'.

13. Ensemble d'au moins deux conduites coaxiales selon l'une des revendications 1 à 12, **caractérisée en ce que** l'extrémité de ladite deuxième branche externe (5₂) présente un chanfrein tourné vers l'extérieur, apte à permettre une soudure depuis l'extérieur.

14. Ensemble d'au moins deux conduites coaxiales selon l'une des revendications 1 à 13, **caractérisée en ce que** ladite pièce de jonction est constituée d'une pièce métallique forgée, de préférence en acier.

15. Procédé de réalisation d'un ensemble de deux conduites coaxiales selon l'une des revendications 1 à 14, comprenant l'assemblage de deux dits éléments unitaires d'un ensemble d'au moins deux conduites coaxiales, **caractérisé en ce que** l'on réalise les étapes dans lesquelles :
1) on assemble un dit premier élément d'ensemble de conduites coaxiales comportant une première dite pièce de jonction à l'extrémité aval, et un deuxième dit élément d'ensemble de conduites coaxiale comportant une deuxième dite pièce de jonction à l'extrémité amont, les deux dites deuxièmes branches externes des deux dites première et deuxième pièces de jonction étant de préférence de même épaisseur, et
2) on rapproche les unes des autres et on soude entre elles les extrémités libres des seules dites deuxièmes branches externe (5₁) desdites première et deuxième pièces de jonction des deux dits éléments d'un ensemble d'au moins deux conduites coaxiales à assembler, les extrémités desdites deux branches internes (5₂) non soudées venant buter en contact l'une avec l'autre lors de l'assemblage des deux dites pièces de jonction, de sorte que lesdites deuxièmes cavités internes (6) ne sont pas étanches vis-à-vis de l'intérieur de ladite paroi interne et de ladite conduite interne.

16. Procédé selon la revendication 15, **caractérisé en ce que** l'une au moins desdites deuxièmes branches internes (5₂) desdites première et deuxième pièces de jonction à assembler, présente une épaisseur diminuant depuis le fond (6₁) de ladite deuxième cavité vers ladite face frontale (7) à l'extrémité de ladite deuxième branche interne (5₂).

17. Procédé selon la revendication 15 ou 16, **caractérisé en ce que** la longueur de dépassement de l'extrémité desdites deuxièmes branches interne et externe l'une par rapport à l'autre d'une dite première pièce de jonction, est apte à s'adapter à la longueur de dépassement de l'extrémité desdites deuxièmes branches interne et externe l'une par rapport à l'autre d'une dite deuxième pièce de jonction à laquelle ladite première pièce de jonction est assemblée.

18. Procédé selon la revendication 15 ou 16, **caractérisé en ce que** lesdites deuxièmes branches externe (5₁) et interne (5₂) de chacune des deux dites pièces de jonction sont telles que leurs extrémités sont sensiblement au même niveau dans ladite direction longitudinale axiale.

## Claims

1. An assembly of at least two coaxial pipes constituted in its intermediate portion by an outer pipe (2₁) and an inner pipe (2₂) defining between them an annular space (2₃), preferably containing lagging material (2₄) and constituted by the joining together of unit elements of at least two coaxial pipes, having at least two coaxial pipe assembly unit elements, each element having at least one end a junction part joined to the junction part (1) of the other said coaxial pipe assembly unit element, with each of said junction parts (1) being a circularly symmetrical junction part defined as follows:
■ in a radial direction relative to a longitudinal axis XX' of symmetry of said part, it is defined by a cylindrical inner wall (1₂) of substantially the same diameter as the intermediate portion of said inner pipe (2₂), and by a cylindrical outer wall (1₁) of diameter substantially equal to the outside diameter of the intermediate portion of said outer pipe (2₁); and
■ in the direction of the longitudinal axis XX':
• on the end of said junction part that is connected by welding (9) to the ends of said outer and inner pipes of a said unit element of an assembly of at least two coaxial pipes, said outer and inner walls (1₁,1₂) of said junction part form in longitudinal section respective outer and inner first branches (3₁, 3₂) of substantially the same thickness as said outer and inner pipes (2₁, 2₂) to which they are connected, said outer and inner first branches (3₁, 3₂) defining a first annular cavity (4); and
• at the opposite end of said junction part that is joined to another said junction part, itself connected by welding (9) to the end of said other unit element of an assembly of two coaxial pipes, said outer and inner walls (1₁,1₂) form in longitudinal section respective outer and inner second branches (5₁, 5₂) defining a second annular cavity (6);
• the two said first and second junction parts being welded to each other solely via the ends of said outer second branches (5₁); and
• the bottoms (4₁, 6₁) of said first and second cavities (4, 6) being spaced apart in said longitudinal direction XX' so as to define a solid zone (10) of said junction part in which said outer and inner walls (1₁, 1₂) form the outer and inner faces of a single cylindrical wall,
the assembly being **characterized in that** the ends of said two inner branches (5₂) that are not welded together come into abutting contact one against the other, such that said second annular cavities (6) are not sealed off from the inside of said inner wall and said inner pipe.

2. An assembly of at least two coaxial pipes according to claim 1, **characterized in that**:
- the free end of said outer second branch (5₁) presents a shape, preferably a chamfer (8), that makes it suitable for being welded to the free end of another said outer second branch of the other junction part to which it is to be joined, said other junction part itself being connected to the end of said other unit element of an assembly of two coaxial pipes; and
- the free end of said inner second branch (5₂) presents a shape for coming into contacting abutment without being welded against the free end of said other inner second branch of said other junction part connected to the end of said other coaxial pipe assembly unit element; and
- the free ends of said second outer branch (5₁) and inner branch (5₂) of a single junction part come substantially to the same level in said longitudinal direction (XX'); and
- the two said outer second branches of the two said junction parts that are assembled together by welding being of the same thickness, greater than the thickness of said outer pipe, and preferably greater than the thickness of said inner second branch of said junction part.

3. An assembly of at least two coaxial pipes according to claim 1 or claim 2, **characterized in that** the free ends of said outer and inner first branches (3₁, 3₂) present a shape, preferably a chamfer (8), that are welded to the respective free ends of said outer and inner pipes (2₁, 2₂), preferably welded respectively from the outside of said outer pipe for said outer first branches, and from the inside of said inner pipe for said inner first branches.

4. An assembly of at least two coaxial pipes according to any one of claims 1 to 3, **characterized in that** said first and second annular cavities (4, 6) present an oblong shape in longitudinal section, the bottoms (4₁, 6₁) presenting a curved shape with radii of curvature that are preferably identical.

5. An assembly of at least two coaxial pipes according to any one of claims 1 to 4, **characterized in that**:
- the bottoms (4₁, 6₁) of said first and second cavities (4, 6) are spaced apart by a length equal to 0.5 to 3 times the maximum thickness of the wall of said junction part in said solid zone (10);
- said outer and inner first branches (3₁, 3₂) form a said first cavity (4) of length equal to 1 to 5 times the thickness of the outer and inner pipes, respectively;
- said outer and inner second branches (5₁, 5₂) form a said second cavity (6) of length equal to 1 to 5 times the thickness of said outer second branch;
- the thickness of said outer second branches (5₁, 5₂) is 5% to 100%, preferably 30% to 70%, greater than the thickness of said outer pipe; and
- the thickness of said outer and inner first branches (3₁, 3₂) is preferably substantially equal to the thickness of said outer and inner pipes, respectively.

6. An assembly of at least two coaxial pipes according to any one of claims 1 to 5, **characterized in that** said inner second branch (5₂) of one of said two junction parts includes on its end face (7) at its free end and extending in the longitudinal zone ZZ', a male or female centering element (7a) co-operating with a respective female or male element (7b) on the end face of the free end of a said inner second branch of said other junction part to which it is to be joined, in such a manner as to:
- provide a centering effect between two junction parts when they are brought together in order to be joined together; and
- adjust the spacing between the end faces of said outer second branches (5₁) of said junction parts to be joined together while they are being brought together for joining purposes so that, preferably, joining can be performed by welding and said welding can be implemented over the entire thickness of said end faces of said outer second branches (5₁) that are joined together.

7. An assembly of at least two coaxial pipes according to claim 6, **characterized in that** said male element (7a) is constituted by a shape that is preferably circularly symmetrical, projecting from said end face of said inner second branch (5₂), said male element co-operating with a corresponding female element (7b) constituted by a complementary, and preferably circularly symmetrical, shape hollowed in the end face of a said inner second branch of a said other junction part to which it is to be joined.

8. An assembly of at least two coaxial pipes according to claim 7, **characterized in that** said projecting shape of said male element is formed by an annular gasket fitted on said end face of said inner second branch.

9. An assembly of at least two coaxial pipes according to any one of claims 1 to 8, **characterized in that** the thickness of said inner second branch (5₂) of one of said two junction parts tapers between the bottom (6₁) of said second annular cavity (6) and said end face (7) of said inner second branch (5₂).

10. An assembly of at least two coaxial pipes according to any one of claims 1 to 9, **characterized in that** the end of said inner first branch (3₂) at the end of said junction part connected directly to a said unit element of a said coaxial pipe assembly projects in said longitudinal axial direction XX' relative to the end of a said outer first branch (3₁) in such a manner that said junction part is assembled to a said unit element of a coaxial pipe assembly in which the end of said outer pipe projects by substantially the same length relative to the end of said inner pipe.

11. An assembly of at least two coaxial pipes according to claim 10, **characterized in that** the end of said outer first branch (3₁) presents an outwardly-facing chamfer suitable for enabling welding to be performed from the outside, and the end of said inner first branch (3₂) presents an inwardly-facing chamfer suitable for enabling welding to be performed from inside said inner pipe.

12. An assembly of at least two coaxial pipes according to any one of claims 1 to 11, **characterized in that** the ends of said inner and outer second branches come to substantially the same level in said longitudinal axial direction XX'.

13. An assembly of at least two coaxial pipes according to any one of claims 1 to 12, **characterized in that** the end of said outer second branch (5₂) presents an outwardly-facing chamfer suitable for enabling welding to be performed from the outside.

14. An assembly of at least two coaxial pipes according to any one of claims 1 to 13, **characterized in that** said junction part is constituted by a forged metal part, preferably of steel.

15. A method of performing an assembly of two coaxial pipes according to any one of claims 1 to 14, comprising the joining together of two said unit elements of an assembly of at least two coaxial pipes, the method being **characterized by** performing the following steps:
1) joining a said first coaxial pipe assembly element having a first said junction part at its downstream end to a second said coaxial pipe assembly element having a second said junction part at its upstream end, said two outer second branches of said first and second junction parts preferably being of the same thickness; and
2) bringing together and welding together the free ends of only said outer second branches (5₁) of said first and second junction parts of said two elements of an assembly of at least two coaxial pipes to be assembled together, the non-welded ends of said two inner branches (5₂) coming into abutting contact against each other during joining of said two junction parts, such that said second annular cavities (6) are not sealed off from the inside of said inner wall and said inner pipe.

16. A method according to claim 15, **characterized in that** at least one of said inner second branches (5₂) of said first and second junction parts to be joined together presents thickness that tapers away from the bottom (6₁) of said second cavity towards said end face (7) of said inner second branch (5₂).

17. A method according to claim 15 or claim 16, **characterized in that** one of said inner and outer second branches of a said first junction part projects beyond the end of the other branch by a length suitable for matching the length whereby the end of one of said inner and outer second branches of a said second junction part to which said first junction part is joined projects beyond the other one of said end.

18. A method according to claim 15 or claim 16, **characterized in that** said outer and inner second branches (5₁, 5₂) of each of said two junction parts are such that their ends are at substantially the same level in said longitudinal axial direction.

## Patentansprüche

1. Anordnung von wenigstens zwei koaxialen Rohrleitungen, die im durchgehenden Teil aus einer äußeren Rohrleitung (2₁) und aus einer inneren Rohrleitung (2₂) besteht, die einen ringförmigen Raum (2₃) begrenzen, der vorzugsweise ein Isolationsmaterial (2₄) umfaßt, bestehend aus der Verbindung von Einzelelementen von wenigstens zwei koaxialen Rohrleitungen, die wenigstens zwei Einzelelemente einer Anordnung von koaxialen Rohrleitungen umfassen, die jeweils an wenigstens einem Ende ein Verbindungsteil aufweisen, das mit dem Verbindungsteil (1) des anderen Einzelelements der Anordnung von koaxialen Rohrleitungen verbunden ist, wobei ein jedes der Verbindungsteile (1) ein Rotationsverbindungsteil ist, das wie folgt begrenzt ist:
- in einer radialen Richtung bezogen auf eine Rotationslängsachse XX' des Teils, ist es durch eine zylindrische Innenwand (1₂) begrenzt, die im wesentlichen den gleichen Durchmesser wie der durchgehende Teil der inneren Rohrleitung (2₂) aufweist, sowie durch eine zylindrische Außenwand (1₁), deren Durchmesser im wesentlichen gleich dem Außendurchmesser des durchgehenden Teils der äußeren Rohrleitung (2₁) ist, und
- in der axialen Längsrichtung XX',
- auf der Seite des Verbindungsteils, die mit dem Ende der äußeren und der inneren Rohrleitung eines Einzelelements einer Anordnung von wenigstens zwei koaxialen Rohrleitungen verschweißt (9) ist, bilden die Außenwand (1₁) und die Innenwand (1₂) des Verbindungsteils im Längsschnitt einen ersten äußeren Schenkel (3₁) bzw. einen ersten inneren Schenkel (3₂) mit im wesentlichen gleicher Dicke wie die äußere Rohrleitung (2₁) und die innere Rohrleitung (2₂), mit denen sie verbunden sind, wobei der erste äußere Schenkel (3₁) und der erste innere Schenkel (3₂) einen ersten ringförmigen Hohlraum (4) begrenzen, und
- auf der gegenüberliegenden Seite des Verbindungsteils, die mit einem weiteren Verbindungsteil verbunden ist, das selbst mit dem Ende des anderen Einzelelements der Anordnung von zwei koaxialen Rohrleitungen verschweißt (9) ist, bilden die Außenwand (1₁) und die Innenwand (1₂) im Längsschnitt einen zweiten äußeren Schenkel (5₁) und einen zweiten inneren Schenkel (5₂), die einen zweiten ringförmigen Hohlraum (6) begrenzen,
- wobei die beiden Verbindungsteile, das erste und das zweite, lediglich im Bereich des Endes der zweiten äußeren Schenkel (5₁) miteinander verschweißt sind, und
- wobei die Böden (4₁, 6₁) des ersten und des zweiten Hohlraums (4, 6) in Längsrichtung XX' derart voneinander beabstandet sind, daß ein massiver Bereich (10) des Verbindungsteils begrenzt wird, in dem die Außenwand (1₁) und die Innenwand (1₂) die Außen- und die Innenseite einer gleichen zylindrischen Wand bilden,
**dadurch gekennzeichnet, daß** die Enden der beiden nicht verschweißten inneren Schenkel (5₂) stoßend miteinander in Kontakt gelangen, so daß die zweiten inneren Hohlräume (6) gegenüber der Innenseite der Innenwand und der inneren Rohrleitung nicht dicht sind.

2. Anordnung von wenigstens zwei koaxialen Rohrleitungen nach Anspruch 1, **dadurch gekennzeichnet, daß**:
- das freie Ende des zweiten äußeren Schenkels (5₁) eine Form, vorzugsweise eine Fase (8) aufweist, die mit dem freien Ende eines weiteren zweiten äußeren Schenkels des anderen Verbindungsteils, mit dem er verbunden werden soll, verschweißt ist, wobei das andere Verbindungsteil selbst mit dem Ende des anderen Einzelelements der Anordnung von zwei koaxialen Rohrleitungen verbunden ist, und
- das freie Ende des zweiten inneren Schenkels (5₂) eine Form aufweist, die mit dem freien Ende des anderen zweiten inneren Schenkels des anderen Verbindungsteils, das mit dem Ende des anderen Einzelelements der Anordnung von koaxialen Rohrleitungen verbunden ist, stoßend in Kontakt gelangt, ohne damit verschweißt zu sein, und
- die freien Enden des zweiten äußeren Schenkels (5₁) und zweiten inneren Schenkels (5₂) eines gleichen Verbindungsteils in der Längsrichtung (X, X') im wesentlichen auf der gleichen Ebene zu liegen kommen, und
- wobei die beiden miteinander verschweißten zweiten äußeren Schenkel der beiden Verbindungsteile die gleiche Dicke aufweisen, die größer als die Dicke der äußeren Rohrleitung und vorzugsweise größer als die Dicke des zweiten inneren Schenkels des Verbindungsteils ist.

3. Anordnung von wenigstens zwei koaxialen Rohrleitungen nach Anspruch 1 oder 2, **dadurch gekennzeichnet, daß** die freien Enden des ersten äußeren Schenkels (3₁) und des ersten inneren Schenkels (3₂) eine Form, vorzugsweise eine Fase (8) aufweisen, die mit den freien Enden der äußeren Rohrleitung (2₁) bzw. der inneren Rohrleitung (2₂) verschweißt sind, für die ersten äußeren Schenkel vorzugsweise von der Außenseite der äußeren Rohrleitung aus bzw. für die ersten inneren Schenkel vorzugsweise von der Innenseite der inneren Rohrleitung aus verschweißt sind.

4. Anordnung von wenigstens zwei koaxialen Rohrleitungen nach einem der Ansprüche 1 bis 3, **dadurch gekennzeichnet, daß** der erste und der zweite ringförmige Hohlraum (4, 6) im Längsschnitt eine längliche Form aufweisen, wobei die Böden (4₁) und (6₁) eine gekrümmte Form aufweisen, deren Krümmungsradien vorzugsweise identisch sind.

5. Anordnung von wenigstens zwei koaxialen Rohrleitungen nach einem der Ansprüche 1 bis 4, **dadurch gekennzeichnet, daß**
- die Böden (4₁, 6₁) des ersten und des zweiten Hohlraums (4, 6) um eine Länge beabstandet sind, die 0,5 bis 3 mal so groß wie die maximale Dicke der Wand des Verbindungsteils in dem massiven Bereich (10) ist,
- die Länge des ersten äußeren und des ersten inneren Schenkels (3₁, 3₂) einen ersten Hohlraum (4) bildet, der 1 bis 5 mal so groß wie die Dicke der äußeren bzw. der inneren Rohrleitung ist,
- die Länge des zweiten äußeren Schenkels (5₁) und des zweiten inneren Schenkels (5₂) einen zweiten Hohlraum (6) bildet, der 1 bis 5 mal so groß wie die Dicke des zweiten äußeren Schenkels ist,
- wobei die Dicke der zweiten äußeren Schenkel (5₁-5₂) um 5 bis 100 %, vorzugsweise um 30 bis 70 % größer als die Dicke der äußeren Rohrleitung ist, und
- wobei vorzugsweise die Dicke des ersten äußeren und ersten inneren Schenkels (3₁, 3₂) im wesentlichen gleich der Dicke der äußeren Rohrleitung bzw. der inneren Rohrleitung ist.

6. Anordnung von wenigstens zwei koaxialen Rohrleitungen nach einem der Ansprüche 1 bis 5, **dadurch gekennzeichnet, daß** der zweite innere Schenkel (5₂) von einem der beiden Verbindungsteile an seiner Stirnseite (7) an seinem freien Ende in Längsrichtung ZZ' ein Einsteck- oder Aufnahme-Zentrierelement (7a) aufweist, das mit einem Aufnahme- bzw. Einsteckelement (7b) der Stirnseite des freien Endes eines zweiten inneren Schenkels des anderen Verbindungsteils, mit dem er verbunden ist, zusammenwirkt, derart, daß:
- eine Zentrierwirkung der beiden Verbindungsteile bei ihrem Annähern für ihr Verbinden sichergestellt wird, und daß
- der Abstand der endseitigen Stirnseiten der zweiten äußeren Schenkel (5₁) von zu verbindenden Verbindungsteilen bei ihrem Annähern für ihr Verbinden eingestellt wird, damit das Verbinden vorzugsweise durch Schweißen erfolgen kann und daß die Schweißung über die gesamte Dicke der Stirnseiten der Enden der verbundenen zweiten äußeren Schenkel (5₁) durchgeführt wird.

7. Anordnung von wenigstens zwei koaxialen Rohrleitungen nach Anspruch 6, **dadurch gekennzeichnet, daß** das Einsteckelement (7a) von einer vorspringenden Form, vorzugsweise vorspringenden Rotationsform, der Stirnseite am Ende des zweiten inneren Schenkels (5₂) gebildet ist, wobei das Einsteckelement mit einem entsprechenden Aufnahmeelement (7b) zusammenwirkt, das von einer ergänzenden Hohlform, vorzugsweise Rotationshohlform, in der Stirnseite am Ende eines zweiten inneren Schenkels eines weiteren Verbindungsteils, mit dem er verbunden ist, gebildet ist.

8. Anordnung von wenigstens zwei koaxialen Rohrleitungen nach Anspruch 7, **dadurch gekennzeichnet, daß** die vorspringende Form des Einsteckelements durch einen Dichtring gebildet ist, der auf die Stirnseite am Ende des zweiten inneren Schenkels aufgesteckt ist.

9. Anordnung von wenigstens zwei koaxialen Rohrleitungen nach einem der Ansprüche 1 bis 8, **dadurch gekennzeichnet, daß** die Dicke des zweiten inneren Schenkels (5₂) von einem der beiden Verbindungsteile zwischen dem Boden (6₁) des zweiten ringförmigen Hohlraums (6) und der Stirnseite (7) des zweiten inneren Schenkels (5₂) abnehmend ist.

10. Anordnung von wenigstens zwei koaxialen Rohrleitungen nach einem der Ansprüche 1 bis 9, **dadurch gekennzeichnet, daß** das Ende des ersten inneren Schenkels (3₂) auf der Seite des Verbindungsteils, das direkt mit einem Einzelelement einer Anordnung von koaxialen Rohrleitungen verbunden ist, in der axialen Längsrichtung XX' über das Ende eines ersten äußeren Schenkels (3₁) derart hinausragt, daß das Verbindungsteil mit einem Einzelelement einer Anordnung von koaxialen Rohrleitungen verbunden ist, dessen Ende der äußeren Rohrleitung im wesentlichen um die gleiche Länge über die innere Rohrleitung hinausragt.

11. Anordnung von wenigstens zwei koaxialen Rohrleitungen nach Anspruch 10, **dadurch gekennzeichnet, daß** das Ende des ersten äußeren Schenkels (3₁) eine nach außen gewandte Fase aufweist, die geeignet ist, ein Schweißen von der Außenseite aus zu ermöglichen, und daß das Ende des ersten inneren Schenkels (3₂) eine nach innen gewandte Fase aufweist, die geeignet ist, ein Schweißen von der Innenseite der inneren Rohrleitung aus zu ermöglichen.

12. Anordnung von wenigstens zwei koaxialen Rohrleitungen nach einem der Ansprüche 1 bis 11, **dadurch gekennzeichnet, daß** die Enden des zweiten inneren und zweiten äußeren Schenkels in der axialen Längsrichtung XX' im wesentlichen auf der gleichen Ebene zu liegen kommen.

13. Anordnung von wenigstens zwei koaxialen Rohrleitungen nach einem der Ansprüche 1 bis 12, **dadurch gekennzeichnet, daß** das Ende des zweiten äußeren Schenkels (5₂) eine nach außen gewandte Fase aufweist, die geeignet ist, ein Schweißen von der Außenseite aus zu ermöglichen.

14. Anordnung von wenigstens zwei koaxialen Rohrleitungen nach einem der Ansprüche 1 bis 13, **dadurch gekennzeichnet, daß** das Verbindungsteil von einem metallischen, vorzugsweise aus Stahl bestehenden Schmiedeteil gebildet ist.

15. Verfahren zur Herstellung einer Anordnung von zwei koaxialen Rohrleitungen nach einem der Ansprüche 1 bis 14, umfassend das Verbinden von zwei Einzelelementen einer Anordnung von wenigstens zwei koaxialen Rohrleitungen, **dadurch gekennzeichnet, daß** die Schritte durchgeführt werden, bei denen:
1) ein erstes Element einer Anordnung von koaxialen Rohrleitungen, das ein erstes Verbindungsteil am stromabwärtigen Ende aufweist, und ein zweites Element einer Anordnung von koaxialen Rohrleitungen, das ein zweites Verbindungsteil am stromaufwärtigen Ende aufweist, verbunden werden, wobei die beiden zweiten äußeren Schenkel der beiden Verbindungsteile, des ersten und des zweiten, vorzugsweise die gleiche Dicke aufweisen, und
2) die freien Enden nur der zweiten äußeren Schenkel (5₁) des ersten und des zweiten Verbindungsteile der beiden Elemente einer Anordnung von wenigstens zwei zu verbindenden koaxialen Rohrleitungen einander genähert und miteinander verschweißt werden, wobei die Enden der beiden nicht verschweißten inneren Schenkel (5₂) bei Verbinden der beiden Verbindungsteile stoßend miteinander in Kontakt gelangen, so daß die zweiten inneren Hohlräume (6) gegenüber der Innenseite der Innenwand und der inneren Rohrleitung nicht dicht sind.

16. Verfahren nach Anspruch 15, **dadurch gekennzeichnet, daß** wenigstens einer der zweiten inneren Schenkel (5₂) der zu verbindenden ersten und zweiten Verbindungsteile eine Dicke aufweist, die vom Boden (6₁) des zweiten Hohlraums aus in Richtung der Stirnseite (7) am Ende des zweiten inneren Schenkels (5₂) abnimmt.

17. Verfahren nach Anspruch 15 oder 16, **dadurch gekennzeichnet, daß** die Länge, um die das Ende des zweiten inneren Schenkels und zweiten äußeren Schenkels eines ersten Verbindungsteils sich einander überragen, geeignet ist, sich der Länge anzupassen, um die das Ende des zweiten inneren Schenkels und zweiten äußeren Schenkels eines zweiten Verbindungsteils, mit dem das erste Verbindungsteil verbunden ist, sich einander überragen.

18. Verfahren nach Anspruch 15 oder 16, **dadurch gekennzeichnet, daß** der zweite äußere Schenkel (5₁) und der zweite innere Schenkel (5₂) von jedem der beiden Verbindungsteile derart sind, daß ihre Enden in der axialen Längsrichtung im wesentlichen auf der gleichen Ebene liegen.
